# EUROPEAN PATENT SPECIFICATION

(11) **EP 3 413 549 B1**
(45) Date of publication and mention of the grant of the patent: **09.09.2020**
(21) Application number: 18187324.1
(22) Date of filing: 29.12.2015
(51) Int. Cl.: H04M 1/725, H04M 1/67

(54) **METHOD AND DEVICE FOR DISPLAYING NOTIFICATION INFORMATION**
VERFAHREN UND VORRICHTUNG ZUM ANZEIGEN VON BENACHRICHTIGUNGSINFORMATIONEN
PROCÉDÉ ET DISPOSITIF D'AFFICHAGE D'INFORMATIONS DE NOTIFICATION

(30) Priority: 30.12.2014 CN 201410851129
(43) Date of publication of application: 12.12.2018
(62) Divisional of application: 15202982.3
(73) Proprietor: Xiaomi Inc., Beijing 100085 (CN)
(72) Inventor: ZHANG, Bo, BEIJING, 100085 (CN); XU, Ruijun, BEIJING, 100085 (CN); WEN, Zhenwei, BEIJING, 100085 (CN)
(74) Representative: Cabinet Beau de Loménie

(56) References cited:
- US-A1- 2014 085 460
- US-A1- 2014 106 711
- US-A1- 2014 273 967

## Description

### TECHNICAL FIELD

The present invention relates to the field of communication technologies and, more particularly, to a method and a device for displaying notification information.

### BACKGROUND

To facilitate users experience, the conventional electronic devices can display various notification information, such as short messages and instant communication information, when they are in a lockscreen status (i.e. status in which the device' s screen is locked). However, the user information may possibly leak since other people except the user can also see such notification information in the lockscreen status.

To prevent the user information leakage, the electronic device may allow the user to set a concrete display mode of the notification information in the lockscreen status according to self-demands, for instance, the mode can be displaying the contents of the notification information, or only prompting that the notification information is received, or not displaying the notification information. However, this display mode of the notification information is unchangeable after the user sets the display mode of the notification information in the lockscreen status.

Document US 2014/0106711 describes a method for displaying a message using a fingerprint and document US 2014/0273967 describes a method for controlling a memo.

### SUMMARY

The invention is set out in the appended claims.

In order to solve the problems in the related art, the present invention provides a method and a device for displaying notification information. The technical solutions are as follows.

According to a first aspect of embodiments of the present invention, there is provided a method for displaying notification information intended to be implemented by an electronic device, including:
receiving notification information in a lockscreen status;
determining a user type of a user that will view the notification information;
determining a display mode of the notification information according to the user type; and displaying the notification information according to the display mode;
wherein determining the user type of the user that will view the notification information includes:
   collecting first face information of a user that uses the electronic device, and obtaining pre-stored second face information of a specific user, comparing the first face information with the second face, and determining the user type of the user that will view the notification information according to the comparison result.
   wherein when the user type indicates that the user is the specific user, the display mode is to display the privacy information in the notification information; and when the user type indicates that the user is non-specific user, the display mode is to not display the notification information.

According to a second aspect of embodiments of the present invention, there is provided an electronic device for displaying notification information, including:
a receiving module configured to receive notification information in a lockscreen status;
a first determination module configured to determine a user type of a user that will view the notification information received by the receiving module;
a second determination module configured to determine a display mode of the notification information according to the user type determined by the first determination module; and
a display module configured to display the notification information according to the display mode determined by the second determination module;
wherein the first determination module includes:
   a determination submodule configured to collect first face information of a user that uses the electronic device, and obtain pre-stored second face information of a specific user, compare the first face information with the second face information, and determine the user type of the user that will view the notification information according to the comparison result.

The present invention also provides a computer program, which when executed on a processor of an electronic device, performs the above method.

The technical solutions provided by the embodiments of the present invention may include the following advantageous effects:
through determining the display mode of the notification information according to the user type of the user that will view the notification information after receiving the notification information in the lockscreen status, and displaying the notification information in the display mode, the display mode of the notification information in the lockscreen status can be determined according to the user type. The problem of being incapable of adapting to different application scenes since the display mode of the notification information is unchangable after the user sets the display mode of the notification information in the lockscreen status is thereby solved, and the effect of improving the adaptability of the display mode of the notification information is achieved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for displaying notification information, according to an exemplary embodiment.
Fig. 2A is a flow chart of a method for displaying notification information, according to another exemplary embodiment.
Fig. 2B is a flow chart of collecting first physiological characteristic information of a user that uses the electronic device, according to an exemplary embodiment.
Fig. 2C is a block diagram showing a display mode of displaying privacy information in the notification information, according to an exemplary embodiment.
Fig. 2D is a block diagram showing a display mode of shielding the privacy information in the notification information, according to an exemplary embodiment.
Fig. 3 is a block diagram of a device for displaying notification information, according to an exemplary embodiment.
Fig. 4 is a block diagram of device for displaying notification information, according to another exemplary embodiment.
Fig. 5 is a block diagram of a device for displaying notification information, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

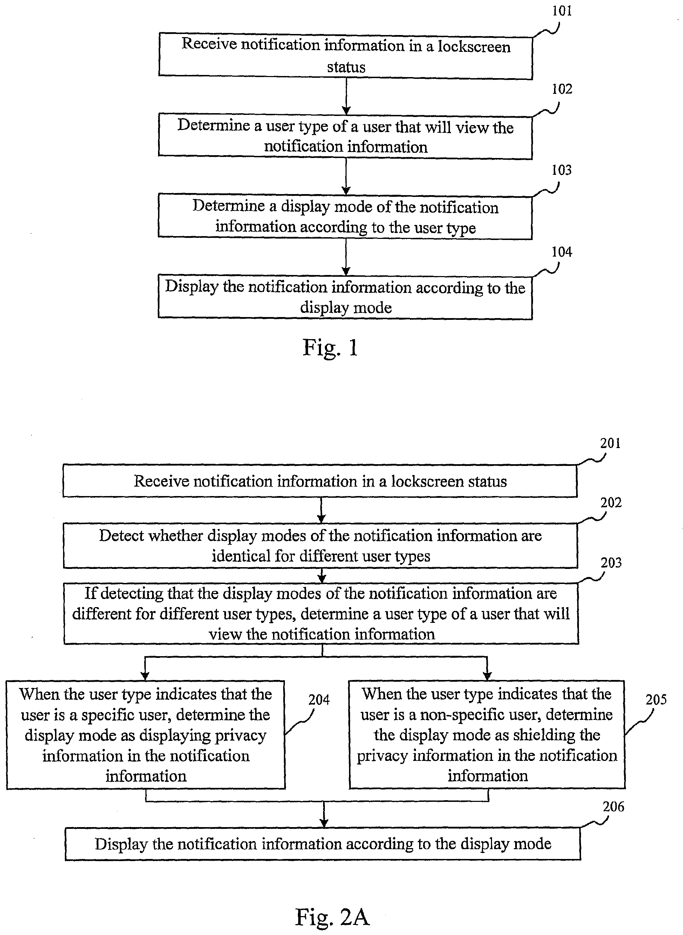

Fig. 1 is a flow chart of a method for displaying notification information, according to an exemplary embodiment. As shown in Fig. 1, the method for displaying notification information is applied by an electronic device which may be a smartphone, a tablet, a smart TV, an e-book reader, a multimedia player, a portable laptop computer, a desktop computer, and the like. The method for displaying notification information includes the following steps.

In step 101, notification information is received while the electronic device is in a lockscreen status. In step 102, a user type of a user that will view the notification information is determined.

In step 103, a display mode of the notification information is determined according to the user type. In step 104, the notification information is displayed according to the display mode.

The determining the user type of the user that will view the notification information includes: detecting whether a wearable device belonging to a specific user exists in a predetermined region, and determining the user type of the user that will view the notification information according to the detection result; or,
collecting first physiological characteristic information of a user that uses the electronic device, and obtaining pre-stored second physiological characteristic information of a specific user, comparing the first physiological characteristic information with the second physiological characteristic information, and determining the user type of the user that will view the notification information according to the comparison result.

In conclusion, in the method for displaying notification information provided by the embodiments of the present invention, through determining the display mode of the notification information according to the user type of the user that will view the notification information after receiving the notification information in the lockscreen status, and displaying the notification information in the display mode, the display mode of the notification information in the lockscreen status can be determined according to the user type. The problem of being incapable of adapting to different application scenes since the display mode of the notification information is unchangable after the user sets the display mode of the notification information in the lockscreen status is thereby solved, and the effect of improving the adaptability of the display mode of the notification information is achieved.

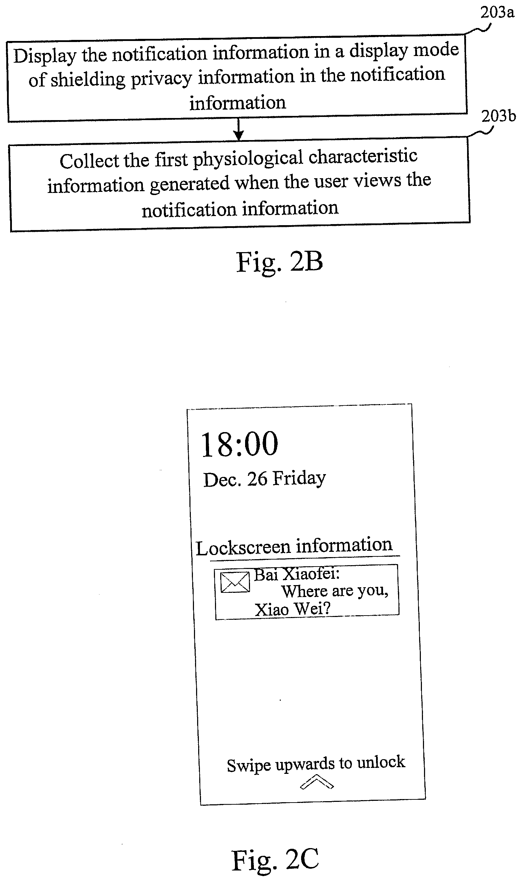

Fig. 2A is a flow chart of a method for displaying notification information, according to another exemplary embodiment. As shown in Fig. 2A, the method for displaying notification information is applied by an electronic device which may be a smartphone, a tablet, a smart TV, an e-book reader, a multimedia player, a portable laptop computer, a desktop computer, and the like. The method for displaying notification information includes the following steps.

In step 201, notification information is received while the electronic device is in a lockscreen status. The lockscreen status here refers to a status in which the screen of the electronic device is locked. Usually, the lockscreen status cannot be relieved unless the electronic device receives an unlock instruction.

The notification information here mainly refers to information received by the electronic device in a screen-off and lockscreen status. Usually, the user may set the display mode of the notification information. For instance, after receiving the notification information, the screen is lightened and the entire contents of the notification information are displayed in a lockscreen interface, or the screen is lightened and one brief prompt is displayed in the lockscreen interface, and after the user unlocks the screen, the entire contents of the notification information are displayed. The notification information here may be short messages, instant communication information, email, push information, and the like received by the electronic device.

In step 202, the display modes of the notification information are detected whether to be identical for different user types.

Usually, the users can be divided into two types, one refers to a specific user and another refers to a non-specific user. The specific user here refers to the user that has the authority to view the privacy information, and the non-specific user is namely the user that does not have the authority to view the privacy information.

Optionally, one electronic device may correspond to many specific users, and these specific users form a specific user group. The specific user group may include an owner of the electronic device, and other specific users in the specific user group can be set by the owner. For instance, the owner of the electronic device sets family members as the specific users of the electronic device, then the specific user group of the electronic device includes the owner and the family members of the owner.

The display mode here refers to a display mode of the notification information when the electronic device is in a lockscreen status. The display mode may be to display the privacy information in the notification information, to shield the privacy information in the notification information, not to display the notification information, and the like. The privacy information here may be a name of a sender that sends the notification information as well as details of the notification information, and the like.

When the entire contents of the notification information are directly displayed in the lockscreen interface and the notification information includes privacy information, there is a problem of leaking the user privacy since a non-specific user can view the privacy information without unlocking the screen.

Therefore, the user may set the display mode of the notification information according to the user type of the user that views the notification information. The user may set different display modes for specific users and non-specific users. For instance, when a specific user views the notification information, the display mode is to display the privacy information in the notification information; and when a non-specific user views the notification information, the display mode is to shield the privacy information in the notification information. For another instance, when a specific user views the notification information, the display mode is to display the privacy information in the notification information; and when a non-specific user views the notification information, the display mode is to not display the notification information, i.e., the electronic device does not give any reminder when receiving the notification information in a lockscreen status. The user may also set identical display modes for specific users and non-specific users. For instance, when a specific user and a non-specific user view the notification information, the display modes are both to display the privacy information in the notification information. Or, when a specific user and a non-specific user view the notification information, the display modes are both to shield the privacy information in the notification information. It should be illustrated that other display modes may also be set for the user types, which will not be illustrated one by one here.

Optionally, the electronic device may allow the user to set the display modes for different types of notification information. For instance, the user may respectively set different display modes for short messages and instant communication information.

The electronic device, after receiving the notification information in a lockscreen status, may detect whether the display modes of the notification information to different user types are identical. If detecting that the display modes of the notification information to different user types are identical, then the notification information can be displayed directly via this display mode, and the method is ended. If it is detected that the display modes of the notification information to different user types are different, then step 203 is performed.

In step 203, if it is detected that the display modes of the notification information to different user types are different, then a user type of a user that will view the notification information is determined.

The electronic device, when detecting that the display modes of the notification information to different user types are different, needs to determine the user type of the user that will view the notification information, so as to determine the display modes of the notification information.

The electronic device may determine the user type of the user that will view the notification information through the following two manners.

In one manner, the electronic device detects whether a wearable device belonging to a specific user exists in a predetermined region, and determines the user type of the user that will view the notification information according to the detection result.

Usually, the electronic device may establish a binding relationship with the wearable device of the specific user in advance. For example, such wearable devices as a wristband are generally connected to such electronic devices as a mobile phone by using a BLE (Bluetooth Low Energy). During binding, the mobile phone writes a password value to a specific attribute of the wristband by the BLE. At this moment, the wristband will prompt the user to confirm through various confirmation methods such as requiring the user to knock the wristband or press a certain key after shaking. The mobile phone, after receiving the confirmation information, saves the MAC (Media Access Control) address of the wristband and the corresponding password value in the confirmation information as binding information.

The electronic device, when determining the user type of the user that will view the notification information, may detect whether a wearable device of a specific user exists in a predetermined range, and determines the user that will view the notification information is the specific user if it detects that the wearable device of the specific user exists in the predetermined range, and determines the user that will view the notification information is a non-specific user if it detects that no wearable device of the specific user exists in the predetermined range. The predetermined range may be a range that keeps a distance from the electronic device less than a distance threshold, for instance, the predetermined range may be within 1m from the electronic device, or may be within 2m from the electronic device.

Optionally, the electronic device may determine the distance between the wearable device and the electronic device according to the bluetooth signal intensity of the wearable device of the specific user. At this moment, the electronic device may set one signal intensity threshold when it detects whether the wearable device of the specific user exists in the predetermined range. When detecting that the bluetooth signal intensity of the wearable device of the specific user is greater than the signal intensity threshold, it indicates that the wearable device of the specific user exists in the predetermined range. When detecting that the bluetooth signal intensity of the wearable device of the specific user is less than the signal intensity threshold, it indicates that no wearable device of the specific user exists in the predetermined range.

In another manner, the electronic device collects first physiological characteristic information of a user that uses the electronic device, and obtains pre-stored second physiological characteristic information of the specific user, compares the first physiological characteristic information with the second physiological characteristic information, and determines the user type of the user that will view the notification information according to the comparison result.

The first physiological characteristic information here refers to the physiological characteristic information of the user that uses the electronic device collected by the electronic device. The second physiological characteristic information refers to the physiological characteristic information of the specific user pre-stored by the electronic device. The physiological characteristic information here may be face information, fingerprint information, voice information, and the like.

The electronic device, after collecting the first physiological characteristic information of the user that uses the electronic device, compares the first physiological characteristic information with the pre-stored second physiological characteristic information of the specific user, and determines that the user that will view the notification information is a specific user if the comparison result is that the first physiological characteristic information and the second physiological characteristic information are identical; and determines that the user that will view the notification information is a non-specific user if the comparison result is that the first physiological characteristic information and the second physiological characteristic information are different.

For example, when the physiological characteristic information is face information, the electronic device may turn on a front camera to acquire the face information of the user that is using the electronic device before displaying the notification information, and match the face information with the face information of the specific user pre-stored in the electronic device, if the acquired face information and the face information of the specific user are successfully matched, then the user that will view the electronic device is determined to be a specific user. If the acquired face information and the face information of the specific user are unsuccessfully matched, then the user that will view the notification information is determined to be a non-specific user.

Optionally, the electronic device may collect the first physiological characteristic information of the user that is using the electronic device through the following steps 203a and 203b.

In step 203a, the notification information is displayed in a display mode of shielding the privacy information in the notification information.

The electronic device, after receiving the notification information in a lockscreen status, determines the display mode of the notification information as shielding the privacy information in the notification information and displays the notification information in this display mode.

In step 203b, the first physiological characteristic information generated when the user views the notification information is collected.

The electronic device may collect the first physiological characteristic information of the user when the user views the notification information. For example, the electronic device may enable the front camera to collect the face information of the user that views the notification information, or the electronic device may collect the fingerprint information of the user that views the notification information through a fingerprint collection region.

In step 204, when the user type indicates that the user is a specific user, the display mode is determined as displaying the privacy information in the notification information.

The electronic device, after determining the user type of the user that will view the notification information, determines the display mode of the notification information as displaying the privacy information in the notification information if the user type indicates that the user is a specific user, wherein the privacy information may be a name of a sender that sends the notification information and details of the notification information, and the like.

For example, referring to Fig. 2C, which is a block diagram showing a display mode of displaying privacy information in the notification information, according to an exemplary embodiment, the electronic device, after receiving the notification information in a lockscreen status and determining that the user that will view the notification information is a specific user, displays the sender name "Bai Xiaofei" of the notification information and the details "Where are you, Xiao Wei?" of the notification information.

In step 205, when the user type indicates that the user is a non-specific user, the display mode is determined as shielding the privacy information in the notification information.

The electronic device, after determining the user type of the user that will view the notification information, determines the display mode of the notification information as shielding the privacy information in the notification information if the user type indicates that the user is a non-specific user.

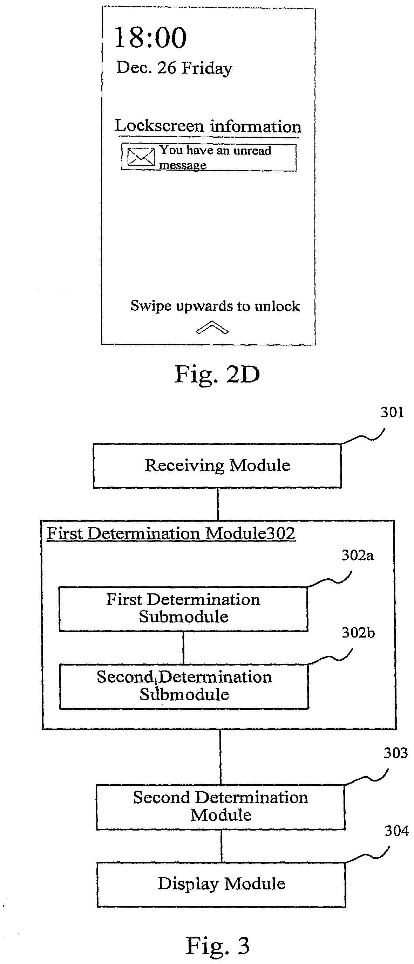

For example, referring to Fig. 2D, which is a block diagram showing a display mode of shielding the privacy information in the notification information, according to an exemplary embodiment, the electronic device, after receiving the notification information in a lockscreen status and determining that the user that will view the notification information is a non-specific user, only displays a notification that "You have an unread message".

In step 206, the notification information is displayed according to the display mode.

The electronic device, after determining the display mode of the notification information, displays the notification information in a lockscreen interface in the display mode.

In conclusion, in the method for displaying notification information provided by the embodiments of the present invention, through determining the display mode of the notification information according to the user type of the user that will view the notification information after receiving the notification information in the lockscreen status, and displaying the notification information in the display mode, the display mode of the notification information in the lockscreen status can be determined according to the user type. Thereby the problem of being incapable of adapting to different application scenes since the display mode of the notification information is unchangable after the user sets the display mode of the notification information in the lockscreen status is solved, and the effect of improving the adaptability of the display mode of the notification information is achieved.

Moreover, when the user type indicates that the user is a specific user, the display mode is determined as displaying the privacy information in the notification information, and when the user type indicates that the user is a non-specific user, the display mode is determined as shielding the privacy information in the notification information, wherein the privacy information in the notification information may be shielded when the non-specific user views the notification information. The problem of leakage of the user information caused by directly displaying the privacy information in the notification information when the electronic device is in a lockscreen status is thus solved, achieving the effect of improving the security of the user information. Furthermore, through displaying the notification information in the display mode of shielding the privacy information in the notification information, collecting the first physiological characteristic information of the user that uses the electronic device, comparing the first physiological characteristic information with the pre-stored second physiological characteristic information of the specific user, and determining the user type of the user that will view the notification information according to the comparison result, the user type can be determined through acquiring the physiological characteristic information of the user, which solves the problem of possible deviation caused by determining the user type through other manners. The effect of the effect of improving the accuracy of determining the user type is achieved.

Embodiments of devices of the present invention are described hereinafter, which may be used for performing embodiments of methods of the present invention. For the details not described in the embodiments of devices of the present invention, please refer to the embodiments of methods of the present invention.

Fig. 3 is a block diagram of a device for displaying notification information, according to an exemplary embodiment. As shown in Fig. 3, the device for displaying notification information is included in or is an electronic device which may be a smartphone, a tablet, a smart TV, an e-book reader, a multimedia player, a portable laptop computer, a desktop computer, and the like. The device for displaying notification information may include, but is not limited to: a receiving module 301, a first determination module 302, a second determination module 303 and a display module 304.

The receiving module 301 is configured to receive notification information in a lockscreen status. The first determination module 302 is configured to determine a user type of a user that will view the notification information received by the receiving module 301.

The second determination module 303 is configured to determine a display mode of the notification information according to the user type determined by the first determination module 302.

The display module 304 is configured to display the notification information according to the display mode determined by the second determination module 303.

The first determination module 302 may include: a first determination submodule 302a or a second determination submodule 302b.

The first determination submodule 302a is configured to detect whether a wearable device belonging to a specific user exists in a predetermined region, and determine the user type of the user that will view the notification information according to the detection result.

The second determination submodule 302b is configured to collect first physiological characteristic information of a user that uses the electronic device, and obtain pre-stored second physiological characteristic information of a specific user, compare the first physiological characteristic information with the second physiological characteristic information, and determine the user type of the user that will view the notification information according to the comparison result.

In conclusion, in the device for displaying notification information provided by the embodiments of the present invention, through determining the display mode of the notification information according to the user type of the user that will view the notification information after receiving the notification information in the lockscreen status, and displaying the notification information in the display mode, the display mode of the notification information in the lockscreen status can be determined according to the user type, which solves the problem of being incapable of adapting to different application scenes since the display mode of the notification information is unchangable after the user sets the display mode of the notification information in the lockscreen status, and achieves the effect of improving the adaptability of the display mode of the notification information .

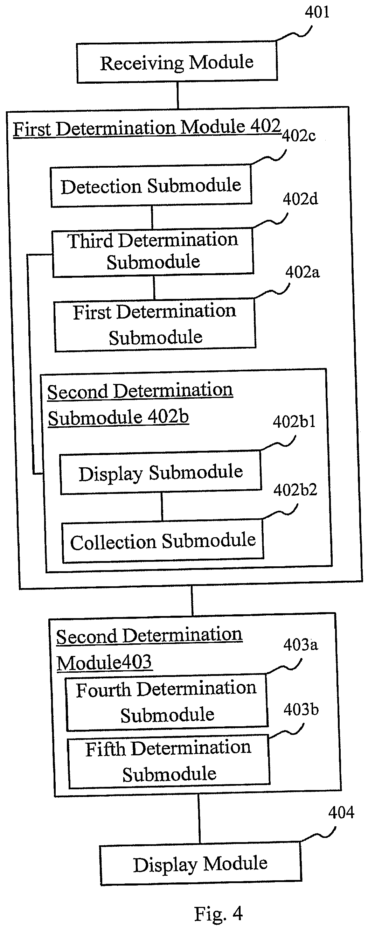

Fig. 4 is a block diagram of a device for displaying notification information, according to another exemplary embodiment. As shown in Fig. 4, the device for displaying notification information is included in or is an electronic device which may be a smartphone, a tablet, a smart TV, an e-book reader, a multimedia player, a portable laptop computer, a desktop computer, and the like. The device for displaying notification information may include, but is not limited to: a receiving module 401, a first determination module 402, a second determination module 403 and a display module 404.

The receiving module 401 is configured to receive notification information in a lockscreen status. The first determination module 402 is configured to determine a user type of a user that will view the notification information received by the receiving module 401.

The second determination module 403 is configured to determine a display mode of the notification information according to the user type determined by the first determination module 402.

The display module 404 is configured to display the notification information according to the display mode determined by the second determination module 403.

The first determination module 402 may include: a first determination submodule 402a or a second determination submodule 402b.

The first determination submodule 402a is configured to detect whether a wearable device belonging to a specific user exists in a predetermined region, and determine the user type of the user that will view the notification information according to the detection result.

The second determination submodule 402b is configured to collect first physiological characteristic information of a user that uses the electronic device, and obtain pre-stored second physiological characteristic information of the specific user, compare the first physiological characteristic information with the second physiological characteristic information, and determine the user type of the user that will view the notification information according to the comparison result.

In a possible embodiment, the second determination submodule 402b may include: a display submodule 402b1 and a collection submodule 402b2.

The display submodule 402bl is configured to display the notification information in a display mode of shielding privacy information in the notification information.

The collection submodule 402b2 is configured to collect the first physiological characteristic information triggered when the user views the notification information displayed by the display submodule 402b1.

In a possible embodiment, the first determination module 402 may include: a detection submodule 402c and a third determination submodule 402d.

The detection submodule 402c is configured to detect whether the display modes of the notification information are identical for different user types.

The third determination submodule 402d is configured to, when the detection submodule 402c detects that the display modes of the notification information are different for different user types, determine the user type of the user that will view the notification information.

In a possible embodiment, the second determination module 403 may include: a fourth determination submodule 403a or a fifth determination submodule 403b.

The fourth determination submodule 403a is configured to, when the user type indicates that the user is a specific user, determine the display mode as displaying the privacy information in the notification information.

The fifth determination submodule 403b is configured to, when the user type indicates that the user is a non-specific user, determine the display mode as shielding the privacy information in the notification information.

In conclusion, in the device for displaying notification information provided by the embodiments of the present invention, through determining the display mode of the notification information according to the user type of the user that will view the notification information after receiving the notification information in the lockscreen status, and displaying the notification information in the display mode, the display mode of the notification information in the lockscreen status can be determined according to the user type, which solves the problem of being incapable of adapting to different application scenes since the display mode of the notification information is unchangable after the user sets the display mode of the notification information in the lockscreen status is solved, and achieves the effect of improving the adaptability of the display mode of the notification information.

Moreover, when the user type indicates that the user is a specific user, the display mode is determined as displaying the privacy information in the notification information, and when the user type indicates that the user is a non-specific user, the display mode is determined as shielding the privacy information in the notification information, wherein the privacy information in the notification information may be shielded when the non-specific user views the notification information, thus solving the problem of leaking the user information caused by directly displaying the privacy information in the notification information when the electronic device is in a lockscreen status, and achieving the effect of improving the security of the user information.

Furthermore, through displaying the notification information in the display mode of shielding the privacy information in the notification information, collecting the first physiological characteristic information of the user that uses the electronic device, comparing the first physiological characteristic information with the pre-stored second physiological characteristic information of the specific user, and determining the user type of the user that will view the notification information according to the comparison result, the user type can be determined through acquiring the physiological characteristic information of the user, which solves the problem of possible deviation caused by determining the user type through other manners; and achieves the effect of improving the accuracy of determining the user type.

With respect to the devices in the above embodiments, the specific manners for performing operations for individual modules therein have been described in detail in the embodiments regarding the methods, which will not be elaborated herein.

An exemplary embodiment of the present invention provides an electronic device for displaying notification information, which can implement the method for displaying notification information provided by the present invention, wherein the electronic device for displaying notification information includes: a processor and a memory for storing instructions executable by the processor;
wherein the processor is configured to:
receive notification information in a lockscreen status;
determine a user type of a user that will view the notification information;
determine a display mode of the notification information according to the user type; and
display the notification information according to the display mode,
wherein the determining the user type of the user that will view the notification information includes:
   detecting whether a wearable device belonging to a specific user exists in a predetermined region, and determining the user type of the user that will view the notification information according to the detection result; or,
   collecting first physiological characteristic information of a user that uses the electronic device, and obtaining pre-stored second physiological characteristic information of the specific user, comparing the first physiological characteristic information with the second physiological characteristic information, and determining the user type of the user that will view the notification information according to the comparison result.

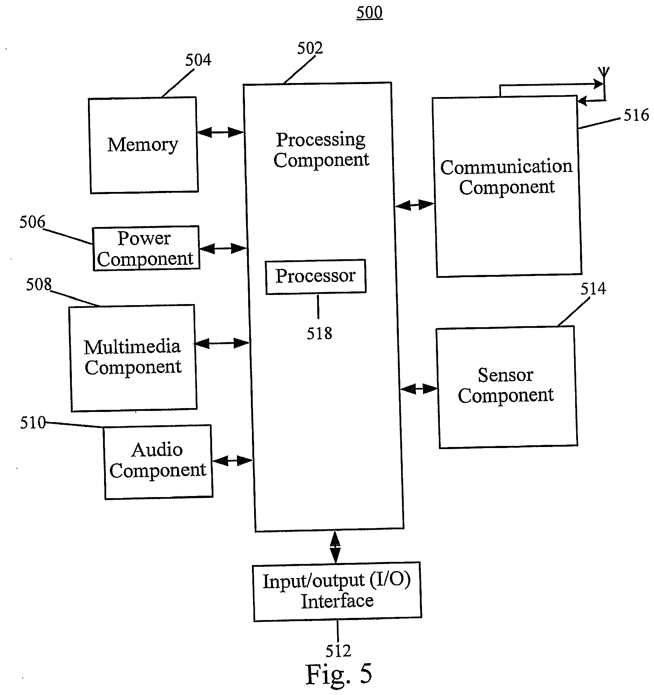

Fig. 5 is a block diagram of an electronic device for displaying notification information, according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, information, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as Wi-Fi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method for displaying notification information.

In exemplary embodiments, there is also provided a non-transitory computer readable storage medium including instructions, such as included in the memory 504, executable by the processor 518 in the device 500, for performing the above-described methods. For example, the non-transitory computer-readable storage medium may be a ROM, a RAM, a CD-ROM, a magnetic tape, a floppy disc, an optical data storage device, and the like.

## Claims

1. A method for displaying notification information intended to be implemented by an electronic device and comprising:
receiving (101, 201) notification information in a lockscreen status;
determining (102) a user type of a user that will view the notification information;
determining (103) a display mode of the notification information according to the user type; and
displaying (104, 206) the notification information according to the display mode;
wherein determining (102) the user type of the user that will view the notification information comprises:
collecting first face information of a user that uses the electronic device, and obtaining pre-stored second face information of a specific user, comparing the first face information with the second face information, and determining the user type of the user that will view the notification information according to the comparison result,
wherein when the user type indicates that the user is the specific user, the display mode is to display the privacy information in the notification information; and when the user type indicates that the user is non-specific user, the display mode is to not display the notification information.

2. The method according to claim 1, wherein collecting the first face information of the user that uses the electronic device comprises:
displaying (203a) the notification information in a display mode of shielding privacy information in the notification information; and
collecting (203b) the first face information generated when the user views the notification information.

3. The method according to claim 1, wherein determining (102) the user type of the user that will view the notification information comprises:
detecting (202) whether the display modes of the notification information are identical for different user types; and
if detecting that the display modes of the notification information are different for different user types, determining (203) the user type of the user that will view the notification information.

4. An electronic device for displaying notification information, comprising:
a receiving module (301, 401) configured to receive notification information in a lockscreen status;
a first determination module (302, 402) configured to determine a user type of a user that will view the notification information received by the receiving module (301, 401);
a second determination module (303, 403) configured to determine a display mode of the notification information according to the user type determined by the first determination module (302, 402); and
a display module (304, 404) configured to display the notification information according to the display mode determined by the second determination module (303, 403);
wherein the first determination module (402) comprises:
a second determination submodule (402b) configured to collect first face information of a user that uses an electronic device, and obtain pre-stored second face information of a specific user, compare the first face information with the second face information, and determine the user type of the user that will view the notification information according to the comparison result,
wherein when the user type indicates that the user is the specific user, the display mode is to display the privacy information in the notification information; and when the user type indicates that the user is non-specific user, the display mode is to not display the notification information.

5. The device according to claim 4, wherein the second determination submodule (402b) comprises:
a display submodule (402b1) configured to display the notification information in a display mode of shielding privacy information in the notification information; and
a collection submodule (402b2) configured to collect the first face information generated when the user views the notification information displayed by the display submodule (402b1).

6. The device according to claim 4, wherein the first determination module (402) comprises:
a detection submodule (402c) configured to detect whether the display modes of the notification information are identical for different user types; and
a third determination submodule (402d) configured to, when the detection submodule (402c) detects that the display modes of the notification information are different for different user types, determine the user type of the user that will view the notification information.

7. A computer program, which when executed on a processor of an electronic device, performs a method according to any one of claims 1 to 3.

## Patentansprüche

1. Verfahren zum Anzeigen von Benachrichtigungsinformationen, das von einer elektronischen Vorrichtung implementiert werden sollen und das umfasst:
Empfangen (101, 201) von Benachrichtigungsinformationen in einem Sperrbildschirm-Status,
Bestimmen (102) eines Benutzertyps eines Benutzers, der die Benachrichtigungsinformationen betrachten wird,
Bestimmen (103) eines Anzeigemodus der Benachrichtigungsinformationen gemäß dem Benutzertyp und
Anzeigen (104, 206) der Benachrichtigungsinformationen gemäß dem Anzeigemodus,
wobei das Bestimmen (102) des Benutzertyps des Benutzers, der die Benachrichtigungsinformationen betrachten wird, umfasst:
Sammeln von ersten Gesichtsinformationen eines Benutzers, der die elektronische Vorrichtung verwendet, und Beziehen von zuvor gespeicherten zweiten Gesichtsinformationen eines spezifischen Benutzers, Vergleichen der ersten Gesichtsinformationen mit den zweiten Gesichtsinformationen und Bestimmen des Benutzertyps des Benutzers, der die Benachrichtigungsinformationen betrachten wird, gemäß dem Vergleichsergebnis,
wobei, wenn der Benutzertyp angibt, dass der Benutzer der spezifische Benutzer ist, der Anzeigemodus darin besteht, die persönlichen Informationen in den Benachrichtigungsinformationen anzuzeigen, und wenn der Benutzertyp angibt, dass der Benutzer ein nichtspezifischer Benutzer ist, der Anzeigemodus darin besteht, die Benachrichtigungsinformationen nicht anzuzeigen.

2. Verfahren nach Anspruch 1, wobei das Sammeln der ersten Gesichtsinformationen des Benutzers, der die elektronische Vorrichtung verwendet, umfasst:
Anzeigen (203a) der Benachrichtigungsinformationen in einem Anzeigemodus zum Abschirmen von persönlichen Informationen in den Benachrichtigungsinformationen und
Sammeln (203b) der ersten Gesichtsinformationen, die erzeugt werden, wenn der Benutzer die Benachrichtigungsinformationen betrachtet.

3. Verfahren nach Anspruch 1, wobei das Bestimmen (102) des Benutzertyps des Benutzers, der die Benachrichtigungsinformationen betrachten wird, umfasst:
Erfassen (202), ob die Anzeigemodi der Benachrichtigungsinformationen für unterschiedliche Benutzertypen identisch sind, und
wenn erfasst wird, dass die Anzeigemodi der Benachrichtigungsinformationen für unterschiedliche Benutzertypen unterschiedlich sind, Bestimmen (203) des Benutzertyps des Benutzers, der die Benachrichtigungsinformationen betrachten wird.

4. Elektronische Vorrichtung zum Anzeigen von Benachrichtigungsinformationen, umfassend:
ein Empfangsmodul (301, 401), das dazu ausgestaltet ist, Benachrichtigungsinformationen in einem Sperrbildschirm-Status zu empfangen,
ein erstes Bestimmungsmodul (302, 402), das dazu ausgestaltet ist, einen Benutzertyp eines Benutzers, der die Benachrichtigungsinformationen betrachten wird, die von dem Empfangsmodul (301, 401) empfangen werden, zu bestimmen,
ein zweites Bestimmungsmodul (303, 403), das dazu ausgestaltet ist, einen Anzeigemodus der Benachrichtigungsinformationen gemäß dem Benutzertyp, der von dem ersten Bestimmungsmodul (302, 402) bestimmt wird, zu bestimmen, und
ein Anzeigemodul (304, 404), das dazu ausgestaltet ist, die Benachrichtigungsinformationen gemäß dem Anzeigemodus, der von dem zweiten Bestimmungsmodul (303, 403) bestimmt wird, anzuzeigen,
wobei das erste Bestimmungsmodul (402) umfasst:
ein zweites Bestimmungsuntermodul (402b), das dazu ausgestaltet ist, erste Gesichtsinformationen eines Benutzers, der eine elektronische Vorrichtung verwendet, zu sammeln und zuvor gespeicherte zweite Gesichtsinformationen eines spezifischen Benutzers zu beziehen, die ersten Gesichtsinformationen mit den zweiten Gesichtsinformationen zu vergleichen und den Benutzertyp des Benutzers, der die Benachrichtigungsinformationen betrachten wird, gemäß dem Vergleichsergebnis zu bestimmen,
wobei, wenn der Benutzertyp angibt, dass der Benutzer der spezifische Benutzer ist, der Anzeigemodus darin besteht, die persönlichen Informationen in den Benachrichtigungsinformationen anzuzeigen, und wenn der Benutzertyp angibt, dass der Benutzer ein nichtspezifischer Benutzer ist, der Anzeigemodus darin besteht, die Benachrichtigungsinformationen nicht anzuzeigen.

5. Vorrichtung nach Anspruch 4, wobei das zweite Bestimmungsuntermodul (402b) umfasst:
ein Anzeigeuntermodul (402b1), das dazu ausgestaltet ist, die Benachrichtigungsinformationen in einem Anzeigemodus zum Abschirmen von persönlichen Informationen in den Benachrichtigungsinformationen anzuzeigen, und
ein Sammlungsuntermodul (402b2), das dazu ausgestaltet ist, die ersten Gesichtsinformationen, die erzeugt werden, wenn der Benutzer die Benachrichtigungsinformationen betrachtet, die von dem Anzeigeuntermodul (402b1) angezeigt werden, zu sammeln.

6. Vorrichtung nach Anspruch 4, wobei das erste Bestimmungsmodul (402) umfasst:
ein Erfassungsuntermodul (402c), das dazu ausgestaltet ist, zu erfassen, ob die Anzeigemodi der Benachrichtigungsinformationen für unterschiedliche Benutzertypen identisch sind, und
ein drittes Bestimmungsuntermodul (402d), das dazu ausgestaltet ist, wenn das Erfassungsuntermodul (402c) erfasst, dass die Anzeigemodi der Benachrichtigungsinformationen für unterschiedliche Benutzertypen unterschiedlich sind, den Benutzertyp des Benutzers, der die Benachrichtigungsinformationen betrachten wird, zu bestimmen.

7. Computerprogramm, das bei Ausführung auf einem Prozessor einer elektronischen Vorrichtung ein Verfahren nach einem der Ansprüche 1 bis 3 durchführt.

## Revendications

1. Procédé pour afficher des informations de notification destiné à être mis en œuvre par un dispositif électronique et comprenant :
la réception (101, 201) des informations de notification dans un statut d'écran de verrouillage ;
la détermination (102) un type d'utilisateur d'un utilisateur qui va visualiser les informations de notification ;
la détermination (103) un mode d'affichage des informations de notification selon le type d'utilisateur ; et
l'affichage (104, 206) les informations de notification selon le mode d'affichage ;
dans lequel la détermination (102) du type d'utilisateur de l'utilisateur qui va visualiser les informations de notification comprend :
la collecte de premières informations faciales d'un utilisateur qui utilise le dispositif électronique, et l'obtention de deuxièmes informations faciales pré-stockées d'un utilisateur spécifique, la comparaison des premières informations faciales avec les deuxièmes informations faciales, et la détermination du type d'utilisateur de l'utilisateur qui va visualiser les informations de notification selon le résultat de comparaison,
dans lequel, lorsque le type d'utilisateur indique que l'utilisateur est l'utilisateur spécifique, le mode d'affichage doit afficher les informations de confidentialité dans les informations de notification ; et lorsque le type d'utilisateur indique que l'utilisateur est un utilisateur non spécifique, le mode d'affichage ne doit pas afficher les informations de notification.

2. Procédé selon la revendication 1, dans lequel la collecte des premières informations faciales de l'utilisateur qui utilise le dispositif électronique comprend :
l'affichage (203a) des informations de notification dans un mode d'affichage de protection des informations de confidentialité dans les informations de notification ; et
la collecte (203b) des premières informations faciales générées lorsque l'utilisateur visualise les informations de notification.

3. Procédé selon la revendication 1, dans lequel la détermination (102) du type d'utilisateur de l'utilisateur qui va visualiser les informations de notification comprend :
la détection (202) de si les modes d'affichage des informations de notification sont identiques pour différents types d'utilisateurs ; et
s'il est détecté que les modes d'affichage des informations de notification sont différents pour différents types d'utilisateurs, la détermination (203) du type d'utilisateur de l'utilisateur qui va visualiser les informations de notification.

4. Dispositif électronique pour afficher des informations de notification, comprenant :
un module de réception (301, 401) configuré pour recevoir des informations de notification dans un statut d'écran de verrouillage ;
un premier module de détermination (302, 402) configuré pour déterminer un type d'utilisateur d'un utilisateur qui va visualiser les informations de notification reçues par le module de réception (301, 401) ;
un deuxième module de détermination (303, 403) configuré pour déterminer un mode d'affichage des informations de notification selon le type d'utilisateur déterminé par le premier module de détermination (302, 402) ; et
un module d'affichage (304, 404) configuré pour afficher les informations de notification selon le mode d'affichage déterminé par le deuxième module de détermination (303, 403) ;
dans lequel le premier module de détermination (402) comprend :
un deuxième sous-module de détermination (402b) configuré pour collecter des premières informations faciales d'un utilisateur qui utilise un dispositif électronique, et obtenir des deuxièmes informations faciales pré-stockées d'un utilisateur spécifique, comparer les premières informations faciales avec les deuxièmes informations faciales, et déterminer le type d'utilisateur de l'utilisateur qui va visualiser les informations de notification selon le résultat de comparaison,
dans lequel, lorsque le type d'utilisateur indique que l'utilisateur est l'utilisateur spécifique, le mode d'affichage doit afficher les informations de confidentialité dans les informations de notification ; et lorsque le type d'utilisateur indique que l'utilisateur est un utilisateur non spécifique, le mode d'affichage ne doit pas afficher les informations de notification.

5. Dispositif selon la revendication 4, dans lequel le deuxième sous-module de détermination (402b) comprend :
un sous-module d'affichage (402b1) configuré pour afficher les informations de notification dans un mode d'affichage de protection des informations de confidentialité dans les informations de notification ; et
un sous-module de collecte (402b2) configuré pour collecter les premières informations faciales générées lorsque l'utilisateur visualise les informations de notification affichées par le sous-module d'affichage (402b1).

6. Dispositif selon la revendication 4, dans lequel le premier module de détermination (402) comprend :
un sous-module de détection (402c) configuré pour détecter si les modes d'affichage des informations de notification sont identiques pour différents types d'utilisateurs ; et
un troisième sous-module de détermination (402d) configuré pour, lorsque le sous-module de détection (402c) détecte que les modes d'affichage des informations de notification sont différents pour différents types d'utilisateurs, déterminer le type d'utilisateur de l'utilisateur qui va visualiser les informations de notification.

7. Programme informatique qui, lorsqu'il est exécuté sur un processeur d'un dispositif électronique, effectue un procédé selon l'une quelconque des revendications 1 à 3.
